# EUROPÄISCHE PATENTANMELDUNG

(11) **EP 1 710 282 A1**
(43) Veröffentlichungstag der Anmeldung: **11.10.2006**
(21) Anmeldenummer: 05007306.3
(22) Anmeldetag: 04.04.2005
(51) Int. Cl.: C09D 5/00, C08F 8/44, C09D 201/02, B05D 7/00

(54) **Verfahren zur Erzeugung festhaftender Beschichtungen auf Oberflächen**

(71) Anmelder: Deutsches Wollforschungsinstitut an der Rheinisch-Westfälischen Technischen Hochschule Aachen e.V., 52062 Aachen (DE)
(72) Erfinder: Möller, Martin, 52070 Aachen (DE); Beginn, Uwe, 4731 Eynatten (BE); Keul, Helmut, 52074 Aachen (DE); Thomas, Helga, 52134 Herzogenrath (DE)
(74) Vertreter: Reitstötter - Kinzebach

(57) **Zusammenfassung**

Beschrieben wird ein Verfahren zur Erzeugung festhaftender Beschichtungen auf Oberflächen, bei dem man a) eine Oberfläche mit einem polymeren Primer behandelt, wobei der Primer im Molekül mehrere quaternäre Ammoniumgruppen und gleichzeitig mehrere funktionelle Gruppen X enthält, die ausgewählt sind unter (i) ethylenisch ungesättigten Gruppen, und (ii) funktionellen Gruppen, die zur Reaktion mit Verbindungen mit komplementär reaktiven Gruppen befähigt sind; und b) die behandelte Oberfläche unter Bedingungen einer Polymerisations- und/oder Kupplungsreaktion mit ethylenisch ungesättigten Verbindungen und/oder Verbindungen mit gegenüber den funktionellen Gruppen komplementär reaktiven Gruppen behandelt.

## Beschreibung

Die dauerhafte Funktionalisierung von Materialoberflächen ist für eine Vielzahl von Materialien und Anwendungen von Bedeutung. Es ist bekannt, die Oberfläche verschiedener organischer und anorganischer Substrate mit synthetischen Polymeren zu beschichten, um den Oberflächen verschiedene erwünschte Eigenschaften zu verleihen, wie Haftvermögen, Hydrophilie oder Hydrophobie, geringe Reibung, Beständigkeit gegen Umwelteinflüsse, Biokompatibilität und dergleichen. Das dabei auftretende Hauptproblem ist die üblicherweise geringe und nicht dauerhafte Haftung zwischen dem organischen Polymer und den davon verschiedenen Substraten, wie Metall, Glas, Keramik und dergleichen.

Die Modifikation einer Oberfläche kann entweder reaktiv durch Ausbildung kovalenter Bindungen oder durch Chemisorption bzw. Adsorption erfolgen. Ein häufig angewandtes Verfahren zum Einführen funktionaler Gruppen an Oberflächen bedient sich der Beschichtung mit funktionalen Silanen, insbesondere Aminosilanen. Die Behandlung mit Aminosilanen ist technisch aufwändig und kann nicht aus wässriger Lösung erfolgen. Ein weiteres Verfahren ist die Elektropfropfung. Ihre Anwendung ist auf elektrisch leitende Substrate beschränkt.

Es besteht ein Bedarf nach einem einfach durchzuführenden Verfahren zur Erzeugung festhaftender Beschichtungen auf Oberflächen.

Die Erfindung betrifft ein Verfahren zur Erzeugung festhaftender Beschichtungen auf Oberflächen, bei dem man
a) eine Oberfläche mit einem polymeren Primer behandelt, wobei der Primer im Molekül mehrere quaternäre Ammoniumgruppen und gleichzeitig mehrere funktionelle Gruppen X enthält, die ausgewählt sind unter (i) ethylenisch ungesättigten Gruppen, und (ii) funktionellen Gruppen, die zur Reaktion mit Molekülen mit komplementär reaktiven Gruppen befähigt sind; und
b) die behandelte Oberfläche unter Bedingungen einer Polymerisations- und/oder Kupplungsreaktion mit ethylenisch ungesättigten Verbindungen und/oder Verbindungen mit gegenüber den funktionellen Gruppen komplementär reaktiven Gruppen behandelt.

Die Begriffe "funktionelle Gruppe" und "komplementär reaktive Gruppe" sind dem Fachmann vertraut und bezeichnen Gruppen, die unter bestimmten Reaktionsbedingungen unter Ausbildung kovalenter Bindungen spezifisch miteinander reagieren können. Bei einer "funktionellen Gruppe" und der "komplementär reaktiven Gruppe" kann es sich auf um eine gleichartige Gruppe handeln, wenn diese eine Polyreaktion eingehen kann, wie z. B. die kationische Polyaddition von Epoxygruppen.

Zu den funktionellen Gruppen, die zur Reaktion mit Verbindungen mit komplementär reaktiven Gruppen befähigt sind, zählen vor allem primäre und sekundäre Aminogruppen, Hydroxylgruppen, Carboxylgruppen, Epoxygruppen, Isocyanatgruppen und Carbonatgruppen. Davon sind Carboxyl-, Epoxy-, Isocyanat- und Carbonatgruppen bevorzugt. Geeignete Carbonatgruppen sind insbesondere 2-Oxo-[1,3]dioxacycloalkylgruppen mit 5- bis 7-gliedrigem Ring (im Folgenden auch als "cyclische Carbonatgruppen" bezeichnet), wie die 2-Oxo-[1,3]dioxolan-4-yl-Gruppe, oder Aryloxycarbonyloxygruppen, wie die Phenyloxycarbonyloxygruppe.

Die ausgezeichnete Haftung des Primers auf der Oberfläche beruht auf ionischen Wechselwirkungen zwischen negativen Oberflächenladungen und den kationischen Ammoniumgruppen. Durch die Kooperativität der vielfachen Ionenpaarbildung entsteht eine sehr starke Bindung, die selbst bei hohen Ionenstärken und extremen pH-Werten stabil ist.

Der Schritt b) des erfindungsgemäßen Verfahrens kann sofort im Anschluss an den Schritt a) ausgeführt werden. Es ist aber ein besonderer Vorteil der Erfindung, dass der Schritt b) räumlich und zeitlich völlig unabhängig vom Schritt a) erfolgen kann. Dies bedeutet insbesondere, dass die Primer-behandelten Oberflächen gelagert und/oder transportiert werden können, bevor der Schritt b) erfolgt.

Durch den Schritt b) werden der Oberfläche spezifische Eigenschaften verliehen, die von der Natur der angewendeten Modifikatoren abhängen. Es ist ein besonderer Vorteil der Erfindung, dass eine sehr große Zahl von Modifikatoren mit den Primer-behandelten Oberflächen umgesetzt werden kann, so dass die physikalischen und chemischen Eigenschaften der ursprünglichen Oberfläche in einem weiten Bereich variiert werden können.

Bei einer bevorzugten Ausführungsformen von Schritt b) behandelt man die Oberfläche unter den Bedingungen einer radikalischen oder kationischen Polymerisation mit ethylenisch ungesättigten Monomeren, wobei man an der Oberfläche fixierte Polymere erhält.

Bei einer anderen bevorzugten Ausführungsformen von Schritt b) behandelt man die Oberfläche unter den Bedingungen einer Polyadditions- oder -kondensationsreaktion mit Monomeren, die über gegenüber den funktionellen Gruppen komplementär reaktive Gruppen verfügen, wobei man an der Oberfläche fixierte Polymere erhält.

Eine weitere bevorzugte Ausführungsformen von Schritt b) betrifft die Kupplung von Oligomeren oder Polymeren, die gegenüber den funktionellen Gruppen komplementär reaktive Gruppen aufweisen. Die komplementär reaktiven Gruppen können als Endgruppen oder Seitengruppen im Oligomer oder Polymer vorliegen, z. B. ausschließlich als Endgruppe an einem Molekülende.

Geeignet für das Verfahren ist jede beliebige Oberfläche, die intrinsisch anionische Gruppen oder Gruppen mit negativen Partialladungen trägt, welche auf Kationen anziehend wirken.

Geeignete anionische Gruppen sind die Anionen von Säuren, deren pKₐ-Wert kleiner als der pKₐ von Wasser ist. Dazu gehören: Carboxylat (-COO'), Sulfat (-OSO₃⁻), Sulfonat (-SO₃⁻), Phosphat ([-OPO(OH)₂₋ₘOₘ]^{m-}, m=1,2), Phosphonat ([-PO(OH)₂₋ₘOₘ]^{m-}, m=1,2), Phenolat (-PhO⁻)

Zu den Gruppen mit negativen Partialladungen gehören: Hydroxy (-OH), Carbonyl (-CO-), Amino (-NR₁R₂), Thiol (-SH), Thio- und Dithiocarbonsäuren (-CSOH, -CS-SH, -CO-SH), Amidine (-CNR-OR, -CNR₁-OR₂), Ester (-CO-OR), Kohlenstoff- und Siliziumether (C-O-C, Si-O-Si).

Oberflächen, die derartige Gruppierungen nicht enthalten, werden durch Coronaplasmaverfahren oder durch Oxidation mittels UV/O₂, Ozon oder anodischer Oxidation mit geeigneten Gruppierungen, insbesondere Carboxylat, Carbonyl- und Hydroxygruppen versehen.

Als Substratmaterialien kommen in Frage:
(i) Bei Gebrauchstemperatur feste Elemente, insbesondere Metalle wie Al, Mg, Fe, Ti oder Kohlenstoff, und alle festen Elemente mit Oxidschichten an der Oberfläche wie z. B. Si/SiOₓ, Fe/FeOₓ, Halbleiter der IV Hauptgruppe und III/V Halbleiter usw.
(ii) Oxidische Oberflächen wie Glas, Quarz, Metalloxide (z. B. B₂O₃, Al₂O₃, SiO₂, FeₓO_{y}), Keramiken, phosphatiertes Eisen, Gestein, Ziegel, Beton.
(iii) Nitridische und boridische Oberflächen.
(iv) Synthetische und natürliche Hochpolymere, wie Proteine, Polysaccharide, Polyolefine, Polyester, Polyamide, Polystyrole, schlagzäh modifizierte Polystyrole.

Das Verfahren ist sowohl anwendbar auf glatte Oberflächen (Platten, Filme, Folien, Formkörper), als auch auf raue oder aufgeraute Oberflächen (Fasern, Bruchflächen), sowie Pulver. Das Verfahren ist insbesondere auch auf textile Fasern anwendbar, wie solche aus Wolle, Baumwolle, Seide, Kunstseide, Polyester, Polyamid; und technische Fasern wie Glasfasern oder Carbonfasern.

Der erfindungsgemäß verwendete Primer enthält mehrere quaternäre Ammoniumgruppen im Molekül, vorzugsweise durchschnittlich wenigstens 5, insbesondere durchschnittlich wenigstens 10 quaternäre Ammoniumgruppen im Molekül. Die durchschnittliche Zahl von quaternären Ammoniumgruppen im Molekül lässt sich z. B. anhand des durchschnittlichen Polymerisationsgrades (Zahl der Wiederholungseinheiten) des Primers und des Substitutionsgrades mit quaternären Ammoniumgruppen berechnen.

Der erfindungsgemäß verwendete Primer enthält mehrere Gruppen X im Molekül, vorzugsweise durchschnittlich wenigstens 5, insbesondere durchschnittlich wenigstens 10 Gruppen X im Molekül. Die durchschnittliche Zahl von Gruppen X im Molekül lässt sich z. B. anhand des durchschnittlichen Polymerisationsgrades (Zahl der Wiederholungseinheiten) des Primers und des Substitutionsgrades mit Gruppen X berechnen.

Der erfindungsgemäß verwendete Primer kann auf verschiedene Weise hergestellt werden, z. B. durch Copolymerisation von Monomeren, die geeignete Seitengruppen tragen. Da aber die Variabilität solcher funktionellen Seitengruppen beschränkt ist, deren Anwesenheit beispielsweise eine radikalische oder kationische Polymerisation nicht beeinträchtigt, erhält man den Primer vorzugsweise durch geeignete Modifizierung eines Primerbasispolymers.

Zweckmäßigerweise ist der Primer daher erhalten durch Umsetzung eines Primerbasispolymers, das über primäre und/oder sekundäre Aminogruppen, Carboxylgruppen und/oder Hydroxylgruppen verfügt, mit einem ersten Derivatisierungsreagenz zur Einführung quaternärer Ammoniumgruppen und gegebenenfalls einem zweiten Derivatisierungsreagenz zur Einführung der Gruppen X. Die Umsetzung mit dem ersten bzw. zweiten Derivatisierungsreagenz kann in beliebiger Reihenfolge oder gleichzeitig in einer Eintopfreaktion erfolgen. Bei der Umsetzung handelt es sich um eine polymeranaloge Reaktion. Der Substitutionsgrad mit quaternären Ammoniumgruppen bzw. mit Gruppen X im Umsetzungsprodukt lässt sich durch Wahl des stöchiometrischen Verhältnisses der Amino-, Carboxyl- und/oder Hydroxygruppen zum Derivatisierungsreagenz einstellen.

Die Umsetzungen mit dem ersten und zweiten Derivatisierungsreagenz erfolgen in einem geeigneten Lösungsmittel bei einer Temperatur und einem pH, die die angestrebte Umsetzung fördern und bei denen keine wesentlichen Nebenreaktionen stattfinden. Im Einzelfall kann die Anwendung eines Katalysators, insbesondere eines basischen Katalysators angebracht sein. Der Fachmann kann geeignete Bedingungen ohne Weiteres ermitteln.

Das Primerbasispolymer weist vorzugsweise ein gewichtsmittleres Molekulargewicht von 200 bis 500000 Dalton, insbesondere 5000 bis 50000 auf.

Als Primerbasispolymer eignen sich Polyamine, z. B. Chitosan, Polyallylamin, Poly-(ethylenimin) oder Poly(vinylamin).

Weiterhin eignen sich z.B. Poly(meth)acrylsäure, Copolymere mit hydrolysierten Maleinsäure- und Itaconsäureanhydrid-Gruppen, Polyvinylalkohol, Polyhydroxyalkyl-(meth)acrylate, -Stärke, Cellulose, (hochverzweigtes) Polyglycerin und dergleichen.

Das erste Derivatisierungsreagenz weist wenigstens eine quaternäre Ammoniumgruppe und wenigstens eine Ankergruppe zur Kupplung an das Primerbasispolymer auf. Ersichtlich ist jede Ammoniumgruppe von einem Äquivalent eines Anions begleitet. Typische Anionen sind Halogenide, wie Chlorid, Bromid, Iodid, Sulfat, Methylsulfat, Sulfonate, wie Methylsulfonat, p-Toluolsulfonat, Trifluormethylsulfonat, und dergleichen. Die Ankergruppe kann mit den primären und/oder sekundären Aminogruppen, Carboxylgruppen und/oder Hydroxylgruppen unter Ausbildung einer kovalenten Bindung reagieren. Geeignete Ankergruppen sind Halogenacylgruppen, Halogenatome (die vorzugsweise an ein primäres Kohlenstoffatom gebunden sind), Epoxygruppen, (Meth)acrylgruppen, Carbonatgruppen, Vinylsulfongruppen, und dergleichen. Geeignete Carbonatgruppen sind insbesondere 2-Oxo-[1,3]dioxacycloalkylgruppen mit 5- bis 7-gliedrigem Ring, wie die 2-Oxo-[1,3]dioxolan-4-yl-Gruppe, oder Aryloxycarbonyloxygruppen, wie die Phenyloxycarbonyloxygruppe. Davon sind 2-Oxo-[1,3]dioxolan-4-yl-Gruppen, Epoxygruppen und Vinylsulfongruppen besonders bevorzugt.

Ein bevorzugtes erstes Derivatisierungsreagenz weist die Formel I auf 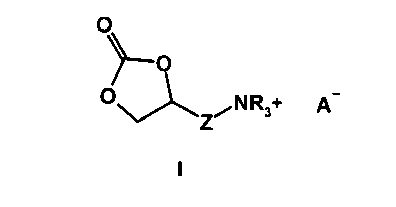 worin Z für C₁-C₁₂-Alkylen oder C₁-C₁₂-Alkylen-O-CO-NH-C₂-C₁₂-Alkylen steht, R für eine C₁-C₆-Alkyl- oder eine Benzylgruppe steht und A- für ein Anion steht. Dieses Reagenz reagiert selektiv mit primären Aminogruppen in wässrigem oder organischem Medium gemäß dem nachstehenden Schema (In diesen und den folgenden Schemata steht P---P für einen Ausschnitt aus dem Gerüst des Primerbasispolymers).

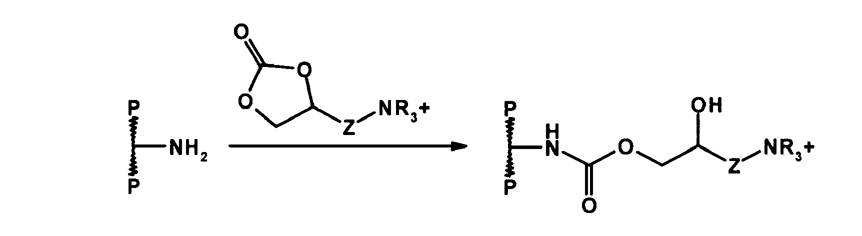

Im Speziellen werden Trimethyl-(2-oxo-[1,3]-dioxolan-4-yl-alkyl)-ammoniumhalogenide, z. B. Trimethyl-(2-oxo-[1,3]-dioxolan-4-yl-methyl)-ammoniumchlorid; oderTrimethyl-[3-(2-oxo-[1,3]dioxo)an-4-yl-alkoxycarbonylamino)-alkyl]-ammoniumhatogenide, z. B. Trimethyl-[3-(2-oxo-[1,3]dioxolan-4-ylmethoxycarbonylamino)-propyl]-ammoniumchlorid, eingesetzt. Letztere sind in der europäischen Patentanmeldung 03028224.8 beschrieben.

Als erstes Derivatisierungsreagenz eignen sich weiterhin Verbindungen der Formel II oder III 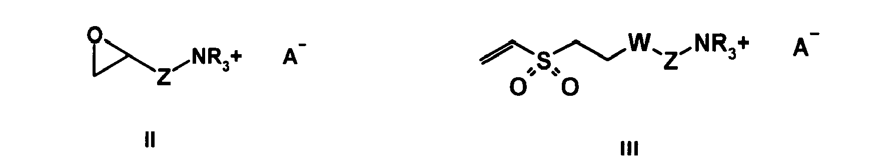 worin Z für C₁-C₁₂-Alkylen, W für O oder NH steht, R für eine C₁-C₆-Alkyl- oder eine Benzylgruppe steht und A- für ein Anion steht.

Diese Verbindungen reagieren mit Hydroxylgruppen oder primären Aminogruppen gemäß den folgenden Schemata:

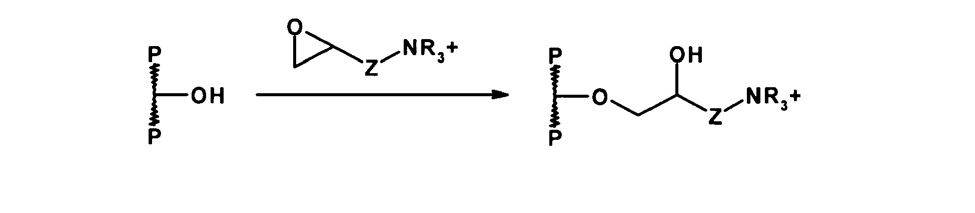

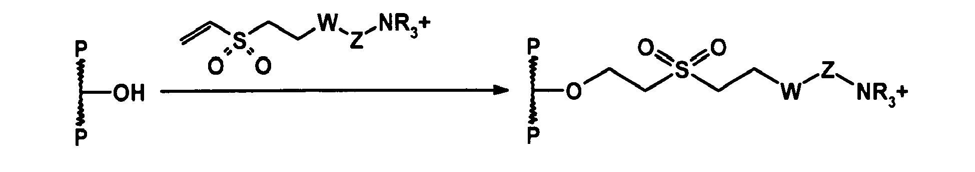

Im Speziellen werden N,N,N-Trimethyl-(ω-oxiranyl-alkyl)-ammonium-Verbindungen eingesetzt. Vorzugsweise wird N,N,N-Trimethyl-(oxiranyl-methyl)-ammoniumchlorid verwendet, welches unter der Bezeichnung QUAB 151 (Degussa) kommerziell erhältlich ist und dessen Herstellung in der BE 671687 beschrieben ist. Die Umsetzung von N,N,N-Trimethyl-(oxiranyl-methyl)-ammoniumchlorid mit Polyvinylalkohol kann nach der in der DE-A 3626662 oder EP-A 141269 angegebenen Methode erfolgen, die Umsetzung mit Stärke ist in der DE-A 3604796 und der US-A 3422087 beschrieben. Zur Umsetzung mit Cellulosepolymeren finden sich Beschreibungen in der JP-A 97-14948.

Die Umsetzungen mit den Derivatisierungsreagenzien der Formeln I, II und II können vorteilhafterweise in wässrigem Medium durchgeführt werden.

Das zweite Derivatisierungsreagenz weist wenigstens eine Gruppe X oder eine Vorläufergruppe, die in eine Gruppe X umgewandelt werden kann, und wenigstens eine Ankergruppe zur Kupplung an das Primerbasispolymer auf. Geeignete Ankerguppen sind die oben in bezug auf das erste Derivatisierungsreagenz genannten.

In einer Ausführungsform handelt es sich bei den Gruppen X um ethylenisch ungesättigte Gruppen, vorzugsweise solche, die Methylidengruppen umfassen, wie Vinyl-, Vinylether-, Vinylsulfon- oder (Meth)acrylatgruppen.

Bevorzugte zweite Derivatisierungsreagenzien zur Einführung von ethylenisch ungesättigte Gruppen sind die folgenden. Diese Verbindungen reagieren bevorzugt mit primären Aminogruppen des Primerbasispolymers: 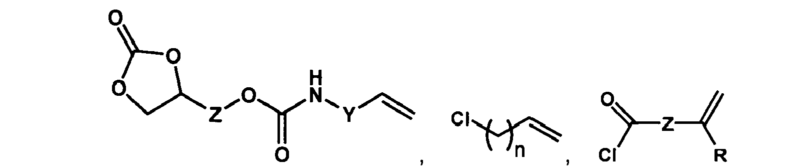 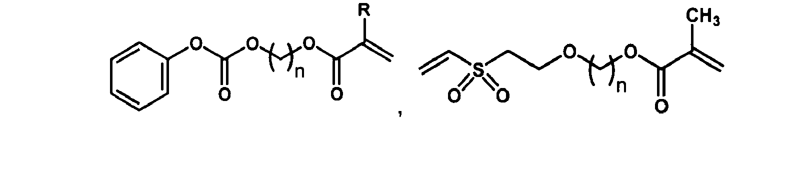 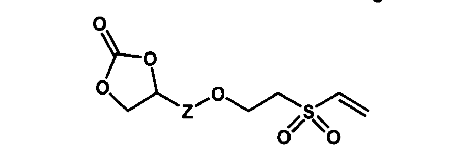 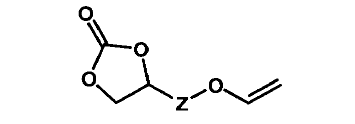 worin Y und Z unabhängig voneinander für C₁-C₁₂-Alkylen stehen, R für Wasserstoff oder Methyl steht und n für eine ganze Zahl von 1 bis 12 steht.

Folgende Verbindungen reagieren bevorzugt mit Hydroxylgruppen des Primerbasispolymers: Unter anderem ist die katalysierte Addition von Alkinen an Hydroxylgruppen möglich, die zur Bildung von Vinylethergruppen führt, sowie die Addition von Alkin-Alkenen, die Seitenketten mit terminalen Vinylgruppen erzeugen. 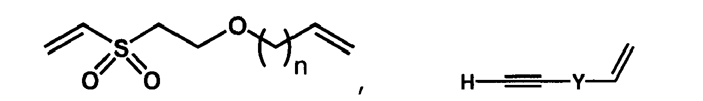 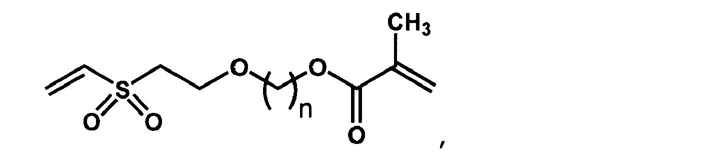 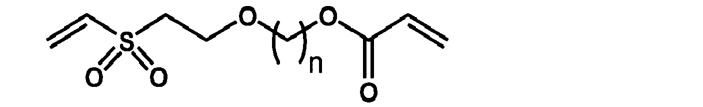 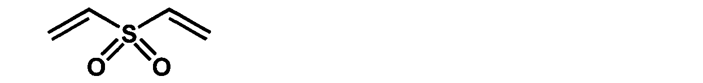 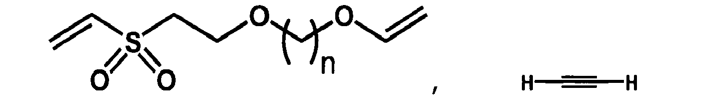 worin Y für C₁-C₁₂-Alkylen steht und n für eine ganze Zahl von 1 bis 12 steht.

Der besondere Vorteil dieser Derivatisierungsreagenzien liegt darin, dass die Umsetzungen in einem wässrigen Medium oder in Zweiphasensystemen mit einer wässrigen und einer nichtwässrigen Phase durchführbar sind, so dass die Primer-Polymere gebrauchsfertig in wässrigem Medium erhalten werden.

Fakultativ kann man das mit dem ersten und zweiten Derivatisierungsreagenz umgesetzte Primerbasispolymer auch mit einem dritten Derivatisierungsreagenz umsetzen, das der Einführung von Initiatorgruppen in das Primermolekül dient. Die Anwesenheit der Initiatorgruppen im Primermolekül weist den Vorteil auf, das sich der Initiator in räumlicher Nähe zu den Gruppen X befindet, so dass die Polymerisation bei der späteren Umsetzung mit Monomeren bevorzugt unter Beteiligung der Oberflächengebundenen Gruppen X erfolgt und ein unerwünschter Polymerisationsstart an von der Oberfläche entfernten Stellen zurückgedrängt wird.

Das dritte Derivatisierungsreagenz weist wenigstens eine Ankergruppe zur Kupplung an das Primerbasispolymer und wenigstens eine Moleküleinheit auf, die als Photoinitiator oder thermischer Initiator, insbesondere als radikalischer Photoinitiator, thermischer Radikalinitiator oder kationischer Photoinitiator wirkt. Geeignete Ankergruppen sind die in Bezug auf das erste Derivatisierungsreagenz genannten.

Geeignete Initiatorgruppen sind solche, die bei Einwirkung von Energie, wie Licht und/oder Wärme, radikalische oder kationische Bruchstücke freisetzen. Hierzu zählen Gruppen mit Benzophenon-, Benzil-, α-Hydroxyalkylphenon-, α-Aminoalkylphenon-, Thioxanthen-9-on-, Peroxy-, Azo-, Sulfonium- oder lodonium-Strukturelementen.

Nachstehend finden sich dritte Derivatisierungsreagenzien, die sich zur Einführung radikalischer Photoinitiatoren eignen: 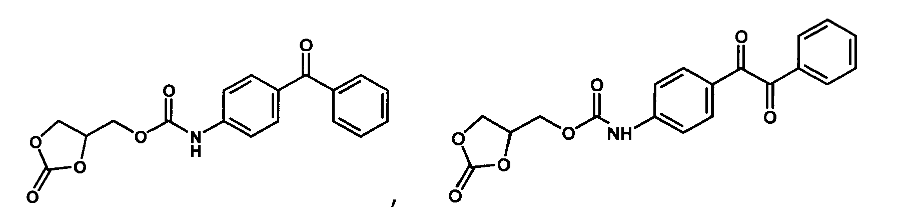 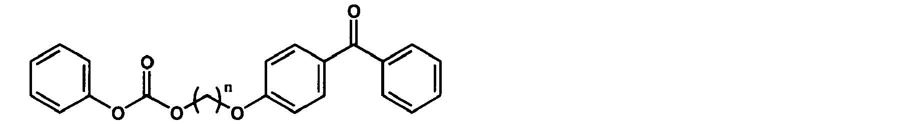 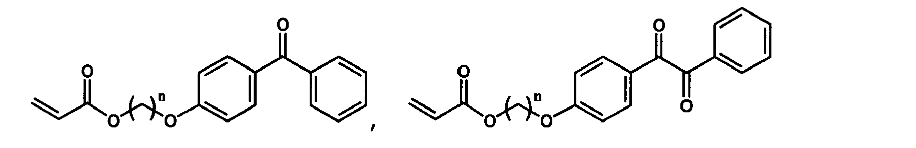 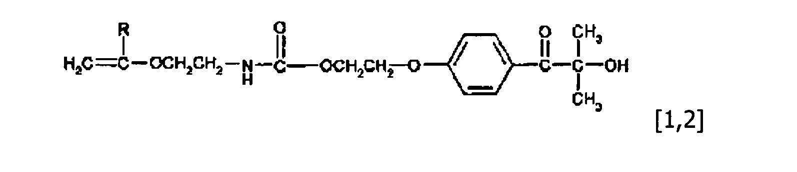 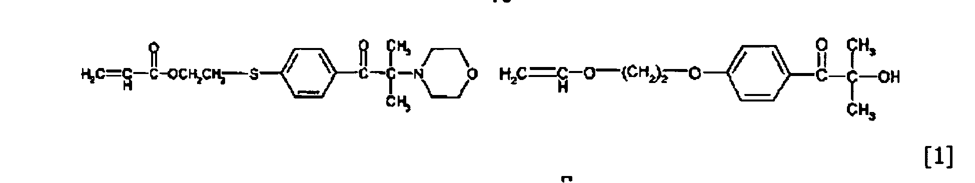 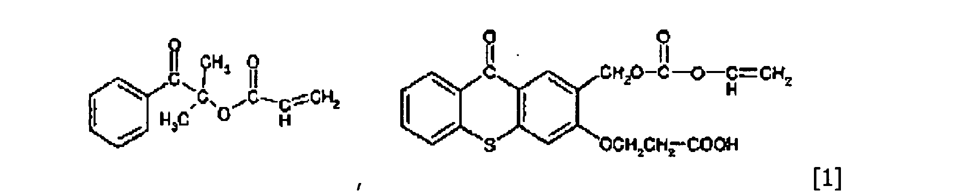 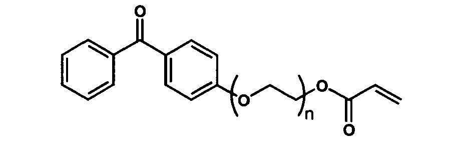 worin n für eine ganze Zahl von 1 bis 12 steht.
[1] WO 2004/05649 A2
[2] EP-A 377191

Nachstehend finden sich dritte Derivatisierungsreagenzien, die sich zur Einführung thermischer Radikalinitiatoren eignen: 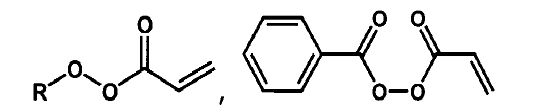 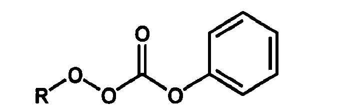 worin R für Wasserstoff, C₁-C₁₈-Alkyl oder Benzyl steht, vorzugsweise *tert*.-Butyl, Lauryl oder Benzyl.

Nachstehend finden sich dritte Derivatisierungsreagenzien, die sich zur Einführung kationischer Photoinitiatoren eignen: 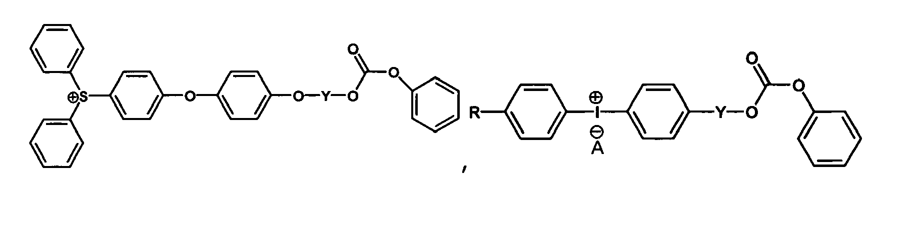 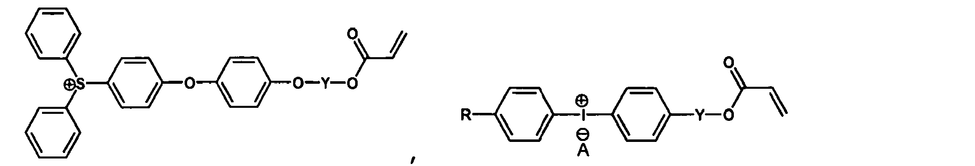 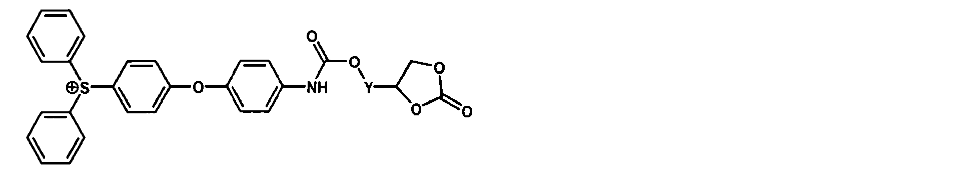 worin Y für Phenylen oder C₁-C₁₂-Alkylen, das gegebenenfalls von einer oder zwei Phenylengruppen flankiert und/oder durch eine oder mehrere Phenylengruppen unterbrochen ist, steht.

In einer anderen Ausführungsform handelt es sich bei den Gruppen X um funktionelle Gruppen, die zur Reaktion mit Molekülen mit komplementär reaktiven Gruppen befähigt sind. Hierzu zählen vor allem primäre und sekundäre Aminogruppen, Hydroxylgruppen, Carboxylgruppen, Epoxygruppen, Isocyanatgruppen und Carbonatgruppen, insbesondere 2-Oxo-[1,3]dioxacycloalkylgruppen mit 5- bis 7-gliedrigem Ring, wie die 2-Oxo-[1,3]dioxolan-4-yl-Gruppe, oder Aryloxycarbonyloxygruppen, wie die Phenyloxycarbonyloxygruppe.

Nicht umgesetzte Amino-, Hydroxyl- und/oder Carboxylgruppen des Primerbasismoleküls, die nach der Umsetzung mit dem ersten Derivatisierungsreagenz verblieben sind, sind an sich geeignete funktionelle Gruppen.

Die nicht umgesetzten Amino-, Hydroxyl- und/oder Carboxylgruppen des Primerbasismoleküls können darüber hinaus durch Umsetzung mit einem zweiten Derivatisierungsreagenz in weitere funktionelle Gruppen umgewandelt werden. Als zweites Derivatisierungsreagenz kommen in Betracht: Bisepoxyde, wie Bisphenol A-diglycidylether (zur Einführung von Epoxygruppen in das Primermolekül), Carbonsäureanhydride (zur Einführung von Carboxylgruppen in das Primermolekül), Dicarbonsäuren (zur Einführung von Carboxylgruppen in das Primermolekül), Diisocyanate wie Isophorondiisocyanat, Hexamethylendiisocyanat (zur Einführung von Isocyanatgruppen in das Primermolekül).

Ein besonders bevorzugtes zweites Derivatisierungsreagenz weist die Formel IV auf 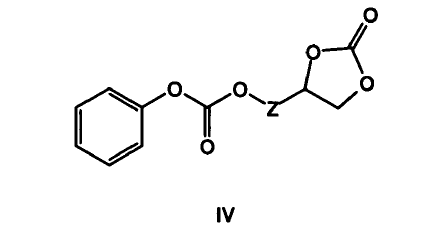 worin Z für C₁-C₁₂-Alkylen steht; vgl. europäische Patentanmeldung Nr. 03028224.8; L. Ubaghs, N. Fricke, H. Keul, H. Hoecker, Macromol. Rapid Commun. 2004, 25, 517-521; J. F. G. A. Jansen, A. A. Dias, M. Dorschu, B. Coussens, Macromolecules 2003, 36(11), 3861-3873; EP-A 18259. Eine geeignete Verbindung der Formel IV ist {2-Oxo-[1,3]dioxolan-1-yl}methylkohlensäurephenylester.

Das Derivatisierungsreagenz der Formel IV reagiert gemäß folgendem Schema mit primären Aminogruppen des Primerbasispolymers, wobei cyclische Carbonatgruppen in das Primermolekül eingeführt werden:

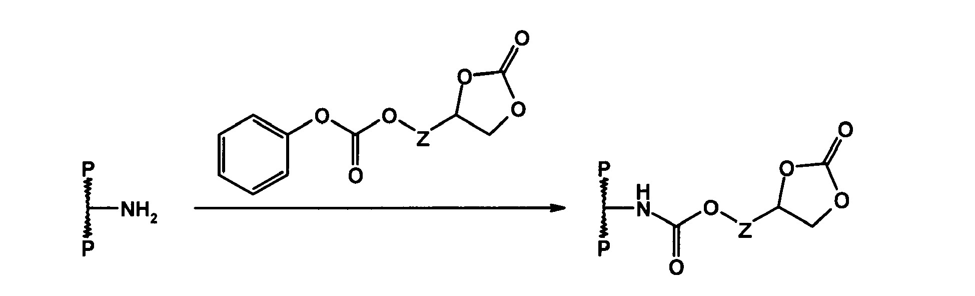

Ein weiteres besonders bevorzugtes zweites Derivatisierungsreagenz weist die Formel V auf 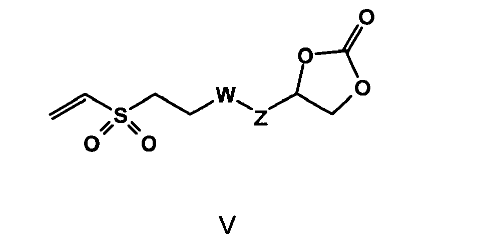 worin W für O oder NH steht und Z für C₁-C₁₂-Alkylen steht.

Das Derivatisierungsreagenz der Formel V reagiert gemäß folgendem Schema mit Hydroxylgruppen des Primerbasispolymers, wobei cyclische Carbonatgruppen in das Primermolekül eingeführt werden:

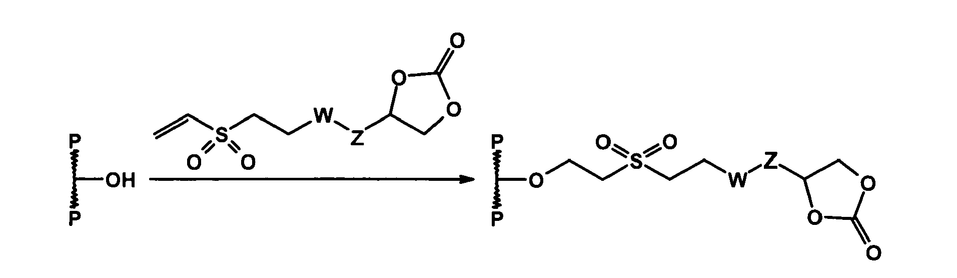

Primerbasispolymere mit Hydroxylgruppen, die wie oben beschrieben mit Epoxy-, Carbonsäure-, Isocyanat- oder Carbonatgruppen funktionalisiert wurden, können durch Reaktion mit einem großen Überschuss eines beliebigen Diamins in Amino-funktionale Primer umgewandelt werden. Mit den so erhaltenen Polymeren können weitere Reaktionen, Modifikationen und Umsetzungen durchgeführt werden.

Es ist weiterhin möglich, ein Primerbasispolymere mit Hydroxylgruppen zuerst mit einem Überschuss von Diphenylcarbonat umzusetzen, wodurch die Hydroxylgruppen in Phenylcarbonatgruppen umgewandelt werden.

Der polymere Primer wird auf die zu behandelnde Oberfläche aufgebracht. Zweckmä-ßigerweise bedient man sich einer Lösung des Primers in einem geeigneten Lösungsmittel, vorzugsweise einer wässrigen Lösung. Jedoch können andere Lösungsmittel, wie Alkohole, z. B. Methanol, Ethanol oder Isopropanol; Ketone, wie Aceton, verwendet werden. Das Aufbringen kann nach allen geeigneten Verfahren erfolgen, z. B. durch Eintauchen der Oberfläche in die Lösung, durch Auftrag der Lösung durch Sprühen, Bürsten und dergleichen. Beispielsweise können linien- oder bahnenförmige Gegenstände, wie Filamente, Fasern oder Folien, durch ein Tauchbad geführt werden. Ein Überschuss der Lösung kann abgestreift oder -gequetscht werden. Die Oberfläche kann im Anschluss an den Auftrag der Lösung getrocknet werden.

Vorzugsweise wird die Konzentration des polymeren Primers in der Lösung und/oder die aufgetragene Menge der Lösung so eingestellt, dass die Schichtdicke des polymeren Primers 50 nm nicht überschreitet. Von besonderem Interesse sind Schichten, deren Dicke 2 bis 40 nm, insbesondere 3 bis 12 nm beträgt.

Im Falle von Primern, die ethylenisch ungesättigte Gruppen tragen, kann zusammen mit dem Primer ein Polymerisationsinitiator aufgebracht werden.

In Fällen, in denen der Primer ethylenisch ungesättigte Gruppen enthält, kann die mit dem polymeren Primer behandelte Oberfläche im Schritt b) des erfindungsgemäßen Verfahrens unter Bedingungen einer Polymerisationsreaktion mit ethylenisch ungesättigten Verbindungen und/oder damit copolymerisierbaren Verbindungen behandelt werden. Der Begriff "ethylenisch ungesättigte Verbindung" umfasst ethylenisch ungesättigte niedermolekulare Monomere, Makromonomere und Gemische davon. Hierzu bringt man ethylenisch ungesättigte Verbindungen auf die behandelte Oberfläche auf und initiiert eine Polymerisation, insbesondere eine radikalische oder kationische Polymerisation. Das Aufbringen der ethylenisch ungesättigte Verbindungen kann lösungsmittelfrei durchgeführt werden.

Man kann die Polymerisation beispielsweise durch Temperaturerhöhung, Bestrahlung mit elektromagnetischen Wellen, insbesondere UV-Licht; Bestrahlung mit energiereichen Elementarteilchen oder Ionen, insbesondere Elektronenstrahlen; oder Eintrag von Ultraschall auslösen.

Bei der Polymerisation bilden sich "Polymerbürsten", die an der Oberfläche verankert sind, d. h. auf die Oberfläche gepfropft sind.

Für die Erfindung eigenen sich zur Beschichtung und nachfolgenden Polymerisation alle Monomere, die sich radikalisch oder kationisch polymerisieren lassen und die bei Normaldruck nicht gasförmig vorliegen.

Im Besonderen sind die folgenden Monomere oder beliebige Gemische aus diesen Monomeren gut geeignet:

Radikalisch polymerisierbare Monomere sind insbesondere Vinylaromaten und N-Vinylheteroaromaten, wie Styrol und substituierte Styrole; (Meth)acrylsäure und Salze davon, (Meth)acrylsäurester, (Meth)acrylsäureamid und N-substituierte (Meth)acrylsäureamide, (Meth)acrylnitril; Itaconsäure und ihre Salze, Itaconsäureester; Itaconimid und N-substituierte Itaconimide, Itaconsäureanhydrid; Vinylester; N-Vinylpyrrolidon, N-Vinylcarbazol; Butadien und substituierte Butadiene; Vinylhalogenide; Vinylidencyanid; α-Cyanacrylsäureester; α-Halogenacrylsäureester; Methylenmalonester; Nitroethylen; Vinylencarbonat und α-Cyansorbinsäureester.

Weiterhin sind Monomere geeignet, die nicht homopolymerisieren, sofern sie im Gemisch mit einem oder mehreren der oben aufgeführten Monomere eingesetzt werden.

Dies sind insbesondere: Allylalkohol; Allylester; Allylhalogenide; Allylamin und N-substituierte Allylamine; Stilben; 1,2-Dichlorethylen; Maleinsäure und Salze der Maleinsäure; Maleinsäureester; Maleinsäureanhydrid; Maleimid und N-substituierte Maleimide.

Mit ethylenisch ungesättigten Gruppen kationisch copolymerisierbare Monomere sind insbesondere Vinylether; α-Olefine; α-Methylstyrol.

Als Makromonomere besonders geeignet sind: Oligomere oder Polymere mit ethylenisch ungesättigten Seitengruppen,wie Styryl-, (Meth)acryloyl-, Vinylether-, Vinylester- oder α-Olefingruppen, sowie Oligomere oder Polymere, die durch ethylenisch ungesättigte Gruppen terminiert sind, wie Polyurethan(meth)acrylate oder Polyester(meth)acrylate.

Neben ethylenisch ungesättigten Verbindungen kann man die Primer-behandelten Oberflächen mit einer Vielzahl weiterer Verbindungen modifizieren. Die beteiligten Polymerisations- oder Kupplungsreaktionen bedürfen im Einzelfall geeigneter Katalysatoren und/oder Reaktionsbedingungen, die dem Fachmann der organischen Synthese geläufig sind.

In Fällen, in denen der Primer Epoxygruppen enthält, sind insbesondere folgende Monomere damit kationisch polymerisierbar: Oxirane; Oxethane; Oxolane; 1,3-Dioxolane; 1,3,5-Trioxan; Thiirane; Azirane; Aziridine; Thiethane; Azethane; Azethidine; Oxazoline; Hexamethylcyclotrisiloxan; Propiolacton.

In Fällen, in denen der Primer Amino-, Hydroxyl-, Carboxyl-, Epoxy- oder Carbonatgruppen enthält, eignen sich insbesondere die folgenden Monomersysteme, makromolekulare Bürstenstrukturen auf die behandelte Oberfläche durch Polykondensation oder Polyaddition aufwachsen zu lassen: Lactame, wie Caprolactam oder Laurylactam; Lactone, wie Caprolacton; Aminocarbonsäuren; Hydroxycarbonsäuren; Bis(epoxyde); Gemische aus Bis(epoxyden) und Diaminen; Gemische aus Bis(epoxyden) und Diolen; Gemische aus Bis(epoxyden) und Dicarbonsäuren oder Carbonsäureanhydriden; Gemische aus Dicarbonsäuren und Diaminen; Gemische aus Dicarbonsäuren und Diolen; Gemische aus Diisocyanaten und Diolen; Gemische aus Diisocyanaten und Diaminen; Gemische aus Diisocyanaten und Dicarbonsäuren; Gemische aus Verbindungen der obigen Formel IV und Diaminen.

Wenn es sich bei den funktionellen Gruppen am Primer um cyclische Carbonatgruppen handelt, so sind die folgenden Monomersysteme besonders wirksam: Gemische aus Bis(epoxyden) und Diaminen; Gemische aus Dicarbonsäuren und Diaminen; Gemische aus Diisocyanaten und Diaminen; Gemische aus Verbindungen der obigen Formel IV und Diaminen.

Wenn es sich bei den funktionellen Gruppen am Primer um Hydroxylgruppen handelt, dann sind die folgenden Monomersysteme zu verwenden: Bis(epoxyde); Gemische aus Bis(epoxyden) und Diaminen; Gemische aus Bis(epoxyden) und Diolen; Gemische aus Bis(epoxyden) und Dicarbonsäuren oder Carbonsäureanhydriden; Gemische aus Dicarbonsäuren und Diolen; Gemische aus Diisocyanaten und Diolen.

In einer weiteren Ausführungsform werden an funktionelle Gruppen des Primers Oligomere oder Polymere gekuppelt, die komplementär reaktive Gruppen aufweisen, z. B. als Seitengruppen oder terminale Gruppen an einem oder mehreren Molekülenden. Bevorzugte Oligomere oder Polymere sind Polyalkylenoxide oder Polysiloxane, die gegebenenfalls geeignet funktionalisiert sind.

In der folgenden Tabelle sind Paare wirksamer komplementärer funktioneller Gruppen zusammengestellt.

| **funktionelle Gruppe am Primer** | **funktionelle Gruppe am Oligomer/Polymer** |
|---|---|
| Vinylsulfon, -SO₂-CH=CH₂ | H₂N-, HNR- |
| | HS-, |
| | HO- |
| Acrylat, -OOC-CH=CH₂ | H₂N-, HNR- |
| | HS-, |
| | HO- |
| Amin, -NH₂ | cyclisches Carbonat, |
| | PhO-CO-O-, |
| | OCN- |
| | HOOC-, Cl-OC-, |
| | CH₂=CH-COO- |
| | Cl-, Br- |
| Carboxy, -COOH | HO- |
| | H₂N- |
| Hydroxy, -OH | PhO-CO-O-, |
| | HOOC-, Cl-OC-, |
| | OCN- |
| | CH₂=CH-COO- |
| | Cl-, Br- |
| cyclisches Carbonat | H₂N- |

Im Speziellen sind die folgenden Kombinationen besonders wirksam:
(1) lineare Ethylenoxid-Propylenoxid-Copolymere, die an einem Molekülende eine primäre Aminogruppe tragen, auf Primer, die mit cyclischem Carbonat funktionalisiert sind.
(2) lineare Ethylenoxid-Propylenoxid-Copolymere und Polydimethylsiloxane, die an einem oder beiden Molekülenden eine Hydroxylgruppe tragen, auf Primer, die mit Vinylsulfongruppen funktionalisiert sind.
(3) lineare Polydimethylsiloxane, die an einem Molekülenden eine Epoxygruppe tragen, auf Primer mit Aminogruppen.

Liegt eine Primer-behandelte Oberfläche vor, auf der freie Amino- oder Hydroxygruppen am Primer vorhanden sind, dann sind im Sinne einer Additionsreaktion besonders solche Makromoleküle kovalent anbindbar, die wenigstens eine unter Epoxyd-, Isocyanat-, Acrylat-, Carbonat-, Phenyloxycarbonyloxy-, Säureanhydridgruppen ausgewählte Gruppe tragen.

Ganz besonders gut eignen sich hierfür: Homo- und Copolymere, die Glycidyl(meth)-acrylat enthalten, Homo- und Copolymere, die (2-Isocyanato-ethyl)(meth)acrylat enthalten, Homo- und Copolymere, die (2-Phenoxycarbonyloxy-ethyl)(meth)acrylat enthalten, Copolymere, die Maleinsäureanhydrid enthalten, Homo- und Copolymere, die Itaconsäureanhydrid enthalten.

Liegt eine Primer-behandelte Oberfläche vor, auf der freie cyclische Carbonatfgruppen am Primer vorhanden sind, dann sind im Sinne einer Additionsreaktion besonders solche Makromoleküle kovalent anbindbar, die wenigstens eine Aminogruppe pro Molekül tragen. Ganz besonders eignen sich hierfür: Poly(ethylenimin), Poly(vinylamin).

Liegt eine Primer-behandelte Oberfläche vor, auf der freie Vinylsulfongruppen am Primer vorhanden sind, dann sind im Sinne einer Additionsreaktion besonders solche Makromoleküle kovalent anbindbar, die wenigstens eine Aminogruppe oder eine Hydroxylgruppe pro Molekül tragen. Ganz besonders geeignet sind: Poly(ethylen)imin, Poly(vinylamin), Poly(vinylalkohol), Poly(hydroxyalkyl(meth)acrylat), Kohlehydratpolymere, z. B. Stärke, Cellulose.

Liegt eine Primer-behandelte Oberfläche vor, auf der Vinylgruppen (CH₂=CH-) am Primer vorhanden sind, dann sind im Sinne einer 1,3-Cycloaddition solche Makromoleküle kovalent anbindbar, die 1,3-Diengruppe oder 1,3-dipolare Strukturen im Molekül tragen. Dies sind insbesondere: Poly(diacetylene), Poly(furan), Poly(thiophen-1,1-dioxid), Polymere, die 1,3-Butadieneinheiten in der Seitenkette enthalten; Polymere, die Furan in der Seitenkette enthalten; Polymere, die Thiophen-1,1-dioxid in der Seitenkette enthalten; Polymere, die Anthracen in der Seitenkette enthalten; Polymere, die 1,3-dipolare Strukturen (Diazoalkane, Azide, Nitil-Ylide, Nitrilimine, Nitriloxide, Azomethin-Ylide, Nitrone, Carbonyloxide) im Molekül enthalten.

Liegt eine Primer-behandelte Oberfläche vor, auf der Vinylgruppen (CH₂=CH-) am Primer vorhanden sind, dann sind im Sinne einer 2+2 Cycloaddition unter UV-Bestrahlung solche Makromoleküle kovalent anbindbar, die eine ungesättigte Gruppierung im Molekül tragen. Dies sind insbesondere Polymere, die C,C-Doppelbindungen enthalten, wie Homo- und Copolymere von Butadien; Polymere, die Aldehyd- oder Ketogruppen enthalten; Polymere, die Vinylether - Seitengruppen enthalten; Polymere, die Vinylgruppen in den Seitenketten enthalten.

Liegt eine Primer-behandelte Oberfläche vor, auf der Vinylgruppen (CH₂=CH-) am Primer vorhanden sind, dann sind im Sinne einer Hydrosilylierungsreaktion in Gegenwart eines Hydrosilylierungskatalysators solche Makromoleküle kovalent anbindbar, die eine Si-H Gruppierung im Molekül tragen. Dazu gehören: Homo- und Copolymere des Methyl-Siloxans (-(CH₃)HSi-O-); Homo- und Copolymere des (2-Dimethylsilanyl-ethyl)(meth)acrylats. Der Hydrosilylierungskatalysators ist entweder (i) zusammen mit dem Quat-Primer Polymeren oder (ii) zusammen mit dem aufzupfropfenden Polymeren zuzugeben.

Liegt eine Primer-behandelte Oberfläche vor, auf der freie Amino- oder Hydroxygruppen am Primer vorhanden sind, dann sind im Sinne einer Kondensationsreaktion besonders solche Makromoleküle kovalent anbindbar, die wenigstens eine der folgenden Gruppen pro Molekül tragen: Carbonsäure, Carbonsäurechlorid, Carbonsäureester; Sulfonsäure, Sulfonsäurechlorid, Sulfonsäureester; Phosphonsäure, Phosphonsäurechlorid, Phosphonsäureester Ganz besonders gut geeignet ist Poly(meth)acrylsäurechlorid.

Werden im Schritt b) des erfindungsgemäßen Verfahrens Monomere mitverwendet, die mehr als eine ethylenisch ungesättigte Gruppe aufweisen oder deren Funktionalität bezüglich der Polyaddition- bzw. -kondensationsreaktion größer ist als 2 ("Vernetzer"), so entstehen oberflächengebundene Polymernetzwerke. Die Netzwerkdichte ist durch das molare Verhältnis von Vernetzern zu den übrigen Monomeren einstellbar.

In einer weiteren Ausführungsform sind niedermolekularen Verbindungen, die reaktive funktionelle Gruppen enthalten, die mit den funktionellen Gruppen des Primers reagieren können, sind an die Primer-behandelte Oberfläche permanent anbindbar. Es ist ein besonderer Vorteil der Erfindung, dass insbesondere solche Substanzen an die Oberfläche gebunden werden können, die aufgrund ihrer hohen Übertragungskonstanten nicht durch Radikalreaktionen anbindbar sind. Dazu gehören: Thiolverbindungen, Phenolverbindungen, Halogenverbindungen, die Iod und Brom enthalten, primäre Amine.

In der folgenden Tabelle sind geeignete Paare funktioneller Gruppen/niedermolekularer Verbindungen zusammengestellt.

| **funktionelle Gruppe am Primer** | **Verbindung** |
|---|---|
| Carbonat | Primäre und sekundäre Amine |
| Vinylsulfon | Primäre Amine, |
| | primäre Alkohole, |
| | primäre Thiole, |
| | Silane |
| Amin | Isocyanate, |
| | Carbonsäuren, |
| | Sulfonsäuren, |
| | Phosphonsäuren |
| Vinyl | Diene (über Diels-Alder-Reaktionen) |
| | 1,3-Dipole (über 1,3-Dipolare Cycloaddition), |
| | Alkene (über photochemische 2+2-Cyclo- |
| | additionen), |
| | Silane (über Hydrosilylierung) |

Die Erfindung wird durch das folgende Beispiel näher veranschaulicht.

### Beispiel

Polyethylenimin (M_{w} = 10000 g/mol, Aldrich) (15.2 mmol NH₂-Gruppen) und Trimethyl-[3-(2-oxo-[1,3]dioxolan-4-ylmethoxycarbonylamino)-propyl]-ammonium-methylsulfat (7.6 mmol) wurden in Methanol bei 70°C 8h gerührt. Das Produkt wurde durch Ausfällen in Toluol isoliert. Die NMR-spektroskopische Analyse zeigte die Anwesenheit aller Bausteine im Produkt.

Die nichtumgesetzten Aminogruppen können durch Umsetzung mit weiteren Derivatisierungsreagenzien in andere funkrionelle Gruppen umgewandelt werden. Mit dem so erhaltenen Primer können verschiedene Oberflächen behandelt werden. Die behandelten Oberflächen können, in Abhängigkeit von der Beschaffenheit der funktionellen Gruppen, durch Behandlung mit ethylenisch ungesättigten Verbindungen oder Verbindungen mit komplementär reaktiven Gruppen modifiziert werden.

## Patentansprüche

1. Verfahren zur Erzeugung festhaftender Beschichtungen auf Oberflächen, bei dem man
a) eine Oberfläche mit einem polymeren Primer behandelt, wobei der Primer im Molekül mehrere quaternäre Ammoniumgruppen und gleichzeitig mehrere funktionelle Gruppen X enthält, die ausgewählt sind unter (i) ethylenisch ungesättigten Gruppen, und (ii) funktionellen Gruppen, die zur Reaktion mit Verbindungen mit komplementär reaktiven Gruppen befähigt sind; und
b) die behandelte Oberfläche unter Bedingungen einer Polymerisations- und/oder Kupplungsreaktion mit ethylenisch ungesättigten Verbindungen und/oder Verbindungen mit gegenüber den funktionellen Gruppen komplementär reaktiven Gruppen behandelt.

2. Verfahren nach Anspruch 1, wobei die funktionellen Gruppen, die zur Reaktion mit Verbindungen mit komplementär reaktiven Gruppen befähigt sind, unter Carboxyl-, Epoxy-, Isocyanat- und Carbonatgruppen ausgewählt sind.

3. Verfahren nach Anspruch 1 oder 2, wobei der Primer durchschnittlich wenigstens 5 quaternäre Ammoniumgruppen im Molekül enthält.

4. Verfahren nach Anspruch 1, 2 oder 3, wobei der Primer erhalten ist durch Umsetzung eines Primerbasispolymers, das über primäre und/oder sekundäre Aminogruppen, Carboxylgruppen und/oder Hydroxylgruppen verfügt, mit einem ersten Derivatisierungsreagenz zur Einführung quaternärer Ammoniumgruppen und gegebenenfalls einem zweiten Derivatisierungsreagenz zur Einführung der Gruppen X.

5. Verfahren nach Anspruch 4, wobei das erste Derivatisierungsreagenz die Formel I aufweist 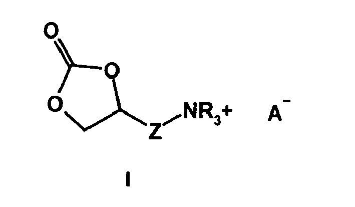 worin Z für C₁-C₁₂-Alkylen oder C₁-C₁₂-Alkylen-O-CO-NH-C₂-C₁₂-Alkylen steht, R für eine C₁-C₆-Alkyl- oder eine Benzylgruppe steht und A⁻ für ein Anion steht.

6. Verfahren nach Anspruch 4, wobei das erste Derivatisierungsreagenz die Formel II oder III aufweist 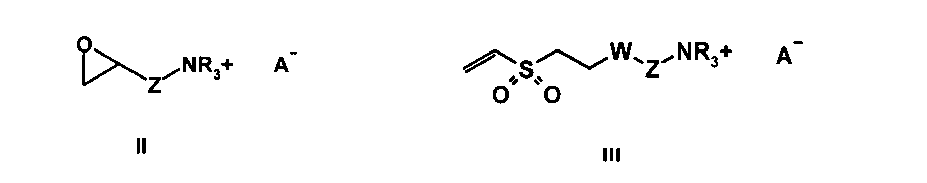 worin Z für C₁-C₁₂-Alkylen, W für O oder NH steht, R für eine C₁-C₆-Alkyl- oder eine Benzylgruppe steht und A- für ein Anion steht.

7. Verfahren nach einem der Ansprüche 4 bis 6, wobei das zweite Derivatisierungsreagenz ausgewählt ist unter 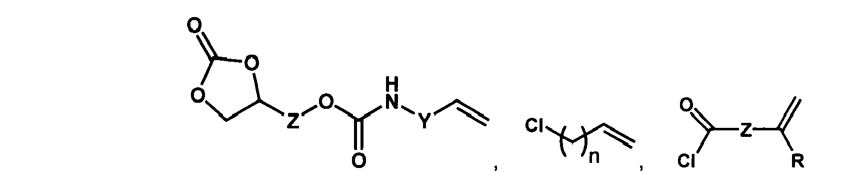 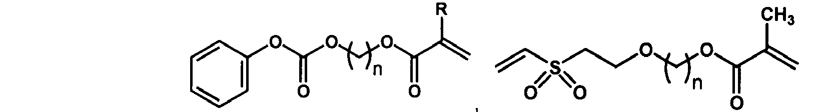 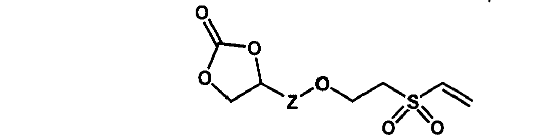 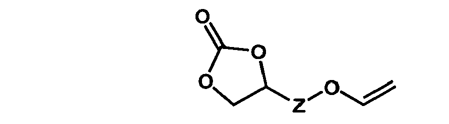 worin Y und Z unabhängig voneinander für C₁-C₁₂-Alkylen stehen, R für Wasserstoff oder Methyl steht und n für eine ganze Zahl von 1 bis 12 steht.

8. Verfahren nach einem der Ansprüche 4 bis 6, wobei das zweite Derivatisierungsreagenz ausgewählt ist unter 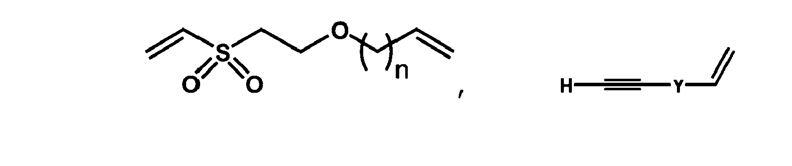 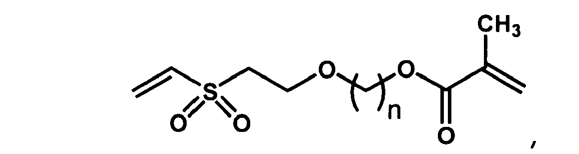 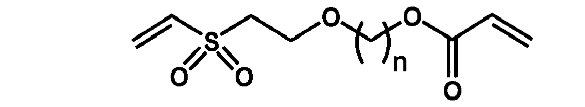 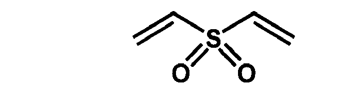 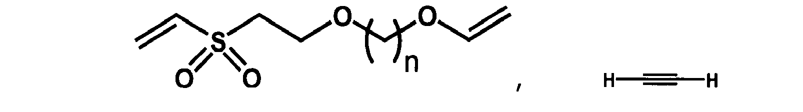 worin Y für C₁-C₁₂-Alkylen steht und n für eine ganze Zahl von 1 bis 12 steht.

9. Verfahren nach einem der Ansprüche 4 bis 8, wobei der Primer erhalten ist, indem man das Primerbasispolymer außerdem mit einem dritten Derivatisierungsreagenz zur Einführung von Initiatorgruppen umsetzt.

10. Verfahren nach einem der Ansprüche 4 bis 6, wobei das zweite Derivatisierungsreagenz die Formel IV aufweist 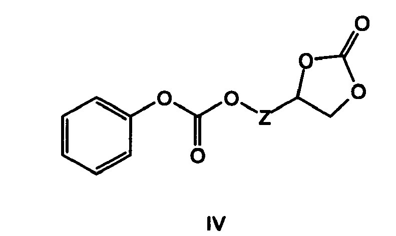 worin Z für C₁-C₁₂-Alkylen steht.

11. Verfahren nach einem der Ansprüche 4 bis 6, wobei das zweite Derivatisierungsreagenz die Formel V aufweist 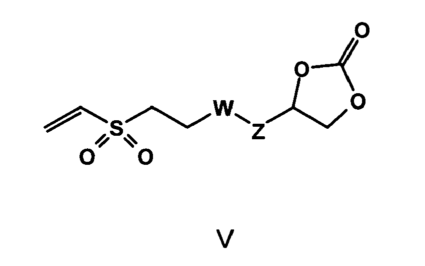 worin W für O oder NH steht und Z für C₁-C₁₂-Alkylen steht.

12. Verfahren nach einem der Ansprüche 4 bis 6, wobei das zweite Derivatisierungsreagenz ausgewählt ist unter Bisepoxyden, Carbonsäureanhydriden, Dicarbonsäuren, Diisocyanaten und Diphenylcarbonat.

13. Verfahren nach einem der vorhergehenden Ansprüche, wobei man im Schritt b) die Oberfläche unter den Bedingungen einer radikalischen oder kationischen Polymerisation mit ethylenisch ungesättigten Monomeren behandelt, wobei man an der Oberfläche fixierte Polymere erhält.

14. Verfahren nach einem der vorhergehenden Ansprüche, wobei man im Schritt b) die Oberfläche unter den Bedingungen einer Polyadditions- oder -kondensationsreaktion mit Monomeren, die über gegenüber den funktionellen Gruppen komplementär reaktive Gruppen verfügen, wobei man an der Oberfläche fixierte Polymere erhält.

15. Verfahren nach einem der vorhergehenden Ansprüche, wobei man im Schritt b) Oligomere oder Polymere an die behandelte Oberfläche kuppelt, die gegenüber den funktionellen Gruppen komplementär reaktive Gruppen aufweisen.

16. Verfahren nach Anspruch 15, wobei die Oligomere oder Polymere unter Polyalkylenoxiden und Polysiloxanen ausgewählt sind.
